# EUROPEAN PATENT APPLICATION

(11) **EP 1 802 083 A1**
(43) Date of publication of application: **27.06.2007**
(21) Application number: 05292789.4
(22) Date of filing: 23.12.2005
(51) Int. Cl.: H04M 1/02, G07F 7/10, G06Q 20/00

(54) **Foldable phone for secure payment**

(71) Applicant: Axalto SA, 92120 Montrouge (FR)
(72) Inventor: Perrin, Benoit c/o Axalto S.A., 92120 Montrouge (FR)
(74) Representative: Cour, Pierre

(57) **Abstract**

The invention relates to a clamshell mobile phone (100) suitable for payment transactions. The clamshell mobile phone (100) comprises an inner part and an outer part, and has a regular user interface comprising hardware components (110-114) located on one part of the clamshell mobile phone (100). The clamshell mobile phone (100) further comprises a secure user interface dedicated to payment transactions, which hardware components are located on the other part of the clamshell mobile phone (100).

## Description

The invention relates to a clamshell mobile phone suitable for payment transactions.

Devices comprising both payment transaction capability and mobile communication capability are known in state of the art. Such devices include regular point of sales terminals, also known as POS, with mobile communication capabilities, and mobile phones with payment applications. Examples of POS with mobile communication capability include products from Axalto®.

Payment transactions typically involve a secret data input step during which the user wishing to perform a payment transaction inputs secret data, in order to enable the payment transaction. Secret data typically comprise PIN codes or passwords. Secret data should be known only by the user performing the payment transaction. Usually payment transactions also involve sensitive data. Sensitive data is not necessarily secret, but should not be tampered with. The amount of the transaction, for example the price in US dollars, is an example of sensitive data. The amount of the transaction is not necessarily secret, but normally, in a secure system, nobody should be able to alter it during the payment transaction.

State of the art devices mentioned above have some drawbacks.

In particular, mobile phones with payment applications are not very secure and cannot undergo certain banking authority certifications, in particular the most stringent ones such as Common Criteria EAL 4+ in place in the United Kingdom, or Visa PCI, which is a leading certification managed by Visa®. Attempts have been made to secure the keypad of the mobile phone, but such mobile phones remain subject to potential attacks, in particular attacks targeting the PIN entry method. Indeed, the same keypad is used for regular mobile phone operations and for typing the PIN enabling the payment transaction. Examples of regular mobile phone operations include typing an SMS, playing a game downloaded from the Internet, composing a phone number, etc. Rogue applications downloaded from the Internet could simulate the legitimate payment application, and while the user believes that he is typing the PIN code for the real payment transaction he might actually be giving his PIN to the rogue application. Examples of rogue applications include applications looking like a game but containing a Trojan horse type virus.

On the other hand, POS having mobile communication capabilities are bulky and cannot be transported easily by a user. Some POS don't integrate the mobile communication capability inside the POS, which makes the POS smaller, but inside a mobile phone which has to be connected to the POS, therefore two devices are needed. Such POS are inconvenient to carry all day, which is a significant drawback in certain domains such as outside marketplace. For examples it is a serious disadvantage for train controllers who need a heavy and cumbersome POS in order to be able to fine train passengers not having a valid train ticket, or for taxi drivers. Additionally, mobile communication features of such POS are usually limited due in particular to the security requirements. For example many POS of this kind can only provide the mobile payment and the voice communication service, but no SMS, no games, etc. The ergonomics of state of the art POS is not well adapted to the use of the terminal as a mobile phone because of the size, of the shape and of the human interface.

Current solutions, consisting of POS with mobile phone capability or mobile phone with POS capability, force the user to compromise significantly the user-friendliness or the security of one of the functions, mobile communication or POS.

The invention relates to a clamshell mobile phone suitable for payment transactions. A clamshell mobile phone is a mobile phone comprising two parts, the two parts consisting of an inner part and an outer part. Clamshell mobile phones usually comprise two elements linked together by a hinge. In general, each of the two elements has substantially the shape of a parallelepiped, one side of one element being in contact with another side of the other element when the clamshell mobile phone is in closed position. In such cases, the sides in contact represent the inner part of the clamshell mobile phone, while the other sides of the elements represent the outer part. When the sides in contact are substantially rectangular, the hinge may be located on the short side of the rectangle, or on the long side of the rectangle.

Clamshell mobile phones have a regular user interface for the user to interact with the clamshell mobile phone. The regular user interface comprises hardware components, in particular it may comprise hardware input means such as a microphone, a keypad, a joystick, a touch pad, a digital camera or a track ball. It may also comprise hardware output means such as a display or a speaker. Clamshell mobile phones may have other components, for example software components associated with the hardware components, or components which are both input and output components at the same time, such as touch sensitive screen, etc.

In a first type of clamshell mobile phones, the regular user interface hardware components are located on the inner part of the clamshell mobile phone. In a second type of clamshell mobile phones, the regular user interface hardware components are located on the outer part of the clamshell mobile phone.

According to the invention, the clamshell mobile phone comprises a secure user interface dedicated to payment transactions, the hardware components of the secure user interface being located on the outer part of the clamshell mobile phone (for first types of clamshell mobile phones) or on the inner part of the clamshell mobile phone (for second types of clamshell mobile phones).

Therefore the regular user interface and the secure user interface are not accessible simultaneously by the user of the clamshell mobile phone, and the size of the clamshell mobile phone is optimized. This solves the aforementioned problem of mobility and security, as will be explained more in details below.

The regular user interface and the secure user interface are preferably independent, in that the electronic chips driving the regular user interface are preferably distinct from the electronic chips driving the secure user interface.

Any data required during a transaction other than a payment transaction (for example secret data, non-secret data, sensitive data, non-sensitive data etc.) is managed by the regular user interface, for example it is input with the hardware input means of the clamshell mobile phone regular user interface such as the regular keypad of the mobile phone and/or output with the hardware output means of the clamshell mobile phone regular user interface such as the regular display of the mobile phone.

Advantageously, the clamshell mobile phone secure user interface hardware components comprise secure hardware input means. Secure hardware input means may comprise a secure keypad or other secure entry devices such as a rolling selector for selecting digits. Such secure keypad can be used to type a user's PIN code or other secret data required during a payment transaction. The secure keypad may be used to input sensitive data or even non-sensitive data required during a payment transaction in addition to secret data required during a payment transaction, but it is preferably dedicated to inputting secret data required during a payment transaction. In other words, non-secret data required during a payment transaction is preferably input with the keypad or other regular user interface hardware input means of the clamshell mobile phone.

It is also advantageous for the clamshell mobile phone secure user interface components to comprise secure hardware output means. Secure hardware output means may comprise a secure display, or a secure jack to which a blind person can connect a personal headset, etc. The secure display can be used to display sensitive data needed during a payment transaction, such as the amount of the transaction. The secure display is preferably used only for displaying sensitive data required during a payment transaction. Instructions relating to the input of secret data are preferably considered sensitive and display on the secure hardware output means. Those instructions may include messages such as "Enter PIN and press OK to validate transaction", and star symbols ("*") appended each time the user enters a new digit, in a manner known in the art. Non-sensitive data required during a payment transaction are preferably displayed with the regular display or other regular user interface hardware output means of the clamshell mobile phone.

In another embodiment, the clamshell mobile phone of the invention further comprises a reader for communicating with a bankcard. Such reader may comprise one or more of the following: contact-less interface for communicating with a contact-less bankcard, magnetic stripe interface for communicating with a magnetic stripe bankcard, and contact interface for communicating with a contact bankcard. A merchant possessing a clamshell mobile phone can therefore use the clamshell mobile phone both as a mobile phone and as a bankcard POS by swiping or otherwise interacting with the bankcard of his customers. This is extremely advantageous, in particular for small merchants with low number of bankcard payment transactions, who do not necessarily want to buy both an expensive POS plus a mobile phone, and for merchants having no fixed address, such as merchants selling products in a different location every day. This is also convenient for many other applications, such as applications for bus or train controllers mentioned above.

It is possible to use the clamshell cell phone for payment transactions without such a reader, for example by having a payment application installed either inside the clamshell mobile phone, or, in a preferred embodiment, in a SIM card installed in the clamshell mobile phone. Such payment application interacts with the customer wishing to perform a payment transaction through the secure user interface of the clamshell mobile phone. For example, the customer may type his bankcard number and expiration date on a secure keypad of the clamshell mobile phone. Alternatively, the payment application may be designed so as not to require the customer to give his bankcard details and not interact in any manner with a bankcard, but instead debit a special account or an e-purse, which may be stored in a SIM card plugged in the clamshell mobile phone.

The invention and its advantages will be explained more in details in the following specification referring to the appended drawings, in which Figure 1 and Figure 2 disclose a first embodiment of a clamshell mobile phone in open and closed position (respectively), Figure 3 and Figure 4 disclosing a second embodiment of a clamshell mobile phone in closed and open position (respectively).

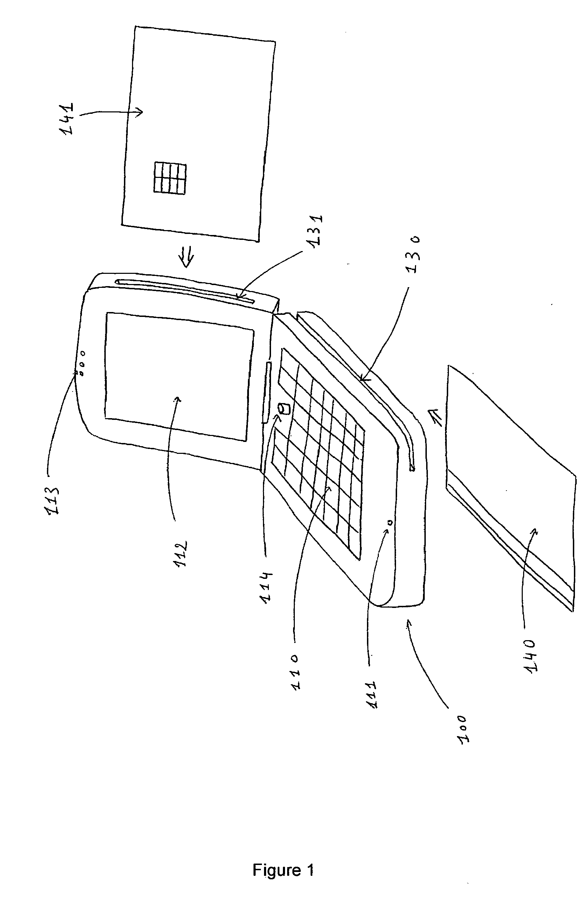

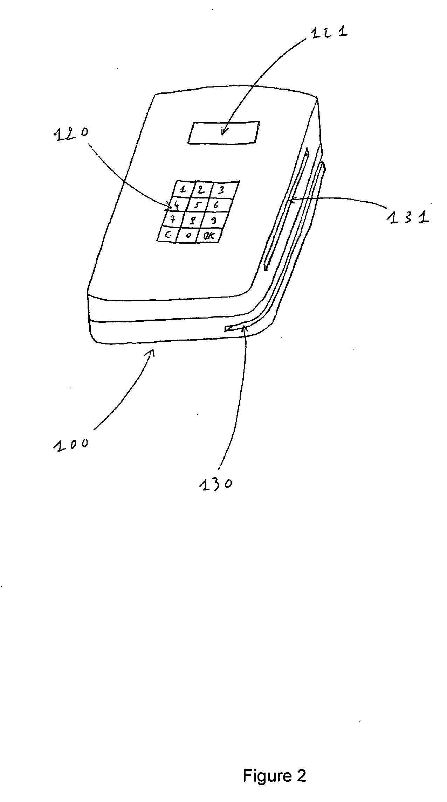

The clamshell mobile phone 100 of Figure 1 and Figure 2 comprises a regular user interface. The hardware components of the regular user interface comprise a keypad 110, a microphone 111, a display 112, a speaker 113 and a joystick 114. The regular user interface hardware components of the clamshell mobile phone 100 are located on the inner part of the clamshell mobile phone 100. The size of the clamshell mobile phone 100 of the invention is similar to the size of regular clamshell mobile phones of state of the art.

The clamshell mobile phone 100 also comprises a secure user interface, the hardware components of the secure user interface comprising a secure keypad 120 serving as secure hardware input means and a secure display 121 serving as secure hardware output means. The secure user interface hardware components of the clamshell mobile phone 100 are located on the outer part of the clamshell mobile phone 100.

The clamshell mobile phone 100 further comprises a reader for communicating with a bankcard. This reader comprises interfaces, namely a magnetic stripe interface 130 for communicating with a magnetic stripe bankcard 140, and an ISO 7816 interface 131 for communicating with an ISO 7816 contact bankcard 141.

The association of a payment terminal and of a cellular phone inside a single device 100 consisting of the clamshell mobile phone 100 according to the invention is advantageous in that it provides users of the device with increased security, increased mobility as the device has smaller space requirements and is therefore easier to carry, increased features since in particular all features of a regular clamshell mobile phone are available, and lower costs. Retailers and merchants may easily accept electronic payments, such as payments with credit or debit cards, and have the possibility to make phone calls with the same device 100, which is advantageous in particular for mobile merchants working in outdoor conditions and for merchants who do not process a high number of payment transactions.

Access to the secure user interface is preferably restricted to certified applications. Such certified applications are preferably certified by an authority, for example a payment transaction authority belonging to a list of predefined authorities stored securely in the clamshell mobile phone. Certification may consist in digitally signing the code of the application with an asymmetric cryptography algorithm. The clamshell mobile phone then preferably incorporates means for verifying that the application has been certified. Such verification may consist in checking that the signature of the application exists and is valid before granting such application access to the secure user interface. This technique makes it very hard for a dishonest third party, for example a dishonest merchant, to install a rogue application prompting a customer for its secret data and recording such secret data for subsequent fraudulent use. This prevents clamshell mobile phones from containing rogue applications using the regular user interface components in a fraudulent manner, since such rogue application has no access to the secure user interface.

The separation of the regular user interface, on the inner part, and the secure user interface, on the outer part, not only optimizes the size of the clamshell mobile phone 100 but also creates a clear boundary between the two, thereby reducing confusion between the two. Users have the perception that the secure user interface plays a distinct role and is dedicated to secure payment transactions.

User awareness is a key component of security, and the above separation between the regular user interface and the secure user interface contributes to user awareness. The distinct role of the secure user interface and of the regular user interface is highlighted by the opening and closing operations needed to switch from one to the other, and can be stressed and amplified by the appearance of the inner and outer parts. For example "Secure interface for payment transactions" can be printed in red on top of the secure user interface, etc. Security conscious users are less likely to be fooled by Trojan horses type viruses and other malware. In this embodiment, the clamshell mobile phone 100 is open when it has to be used as a mobile phone, and also for the initial phase of a payment transaction, but it is closed when it comes to the secure part of a payment transaction, which in preferred embodiments is the final part of the transaction.

For example, in order to call another person, the user of the clamshell mobile phone 100 opens the clamshell mobile phone 100, types the phone number on the keypad 110 and checks it on the display 112, press the dial button on the keypad 110, and upon connection to the other party, speaks in the microphone 111 and listens to the other party through the speaker 113, in a manner well known in the art. Similarly, the clamshell mobile phone 100 remains in open position when the user browses the web on the display 112 using a web browser of the clamshell mobile phone and the joystick 114.

The closed position is preferably dedicated to the secure part of a payment transaction. For example the merchant may enter the amount on the keypad 110, insert the customer bankcard 141 in the interface 131, close the clamshell mobile phone 100 and pass it to the customer for amount verification and customer PIN entry, which is the secure phase of the payment transaction of this example.

Another advantage of the clamshell mobile phones 100 is that the regular user interface hardware components 110-114 of the clamshell mobile phone 100 are preserved from dirt and wear. This is particularly advantageous when merchants possess a clamshell mobile phone 100 which they use as a regular mobile phone, the mobile phone function constituting a personal function, in that only the merchant uses the regular user interface hardware components 110-114. Indeed, the clamshell mobile phone 100 also has a public function, which consists in allowing every customers of the merchant to type their PIN code on the secure keypad 120. While typing their PIN code, customers may put some dirt on the secure user interface, and may also wear it out, but they don't damage the regular user interface.

In preferred embodiments, a switch may be added on the clamshell mobile phone 100. The switch detects when a user opens the clamshell mobile phone 100. The switch may for example extend above the surface of the inner part, which results in the switch being pressed when the clamshell mobile phone 100 is closed. The switch permits deactivating the secure user interface. Such deactivation is particularly advantageous, since it may prevent any action on the secure user interface when the clamshell mobile phone 100 is in open position. In particular, the switch may participate in preventing fishing by adding another level of protection, complementary with protection means such as aforementioned application signing. Fishing is a technique used by certain hackers consisting in particular in redirecting users to a wrong web page, such wrong web page imitating a real web page such as the user's bank web site. Fishing might then fool users into typing their PIN code. With the switch, users are unable to type their PIN unless they close the clamshell mobile phone. Closing the clamshell mobile phone activates the switch and may also trigger other countermeasures.

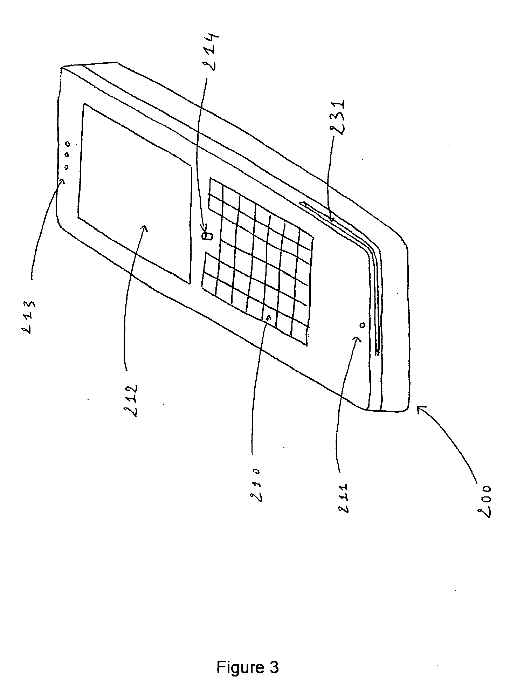

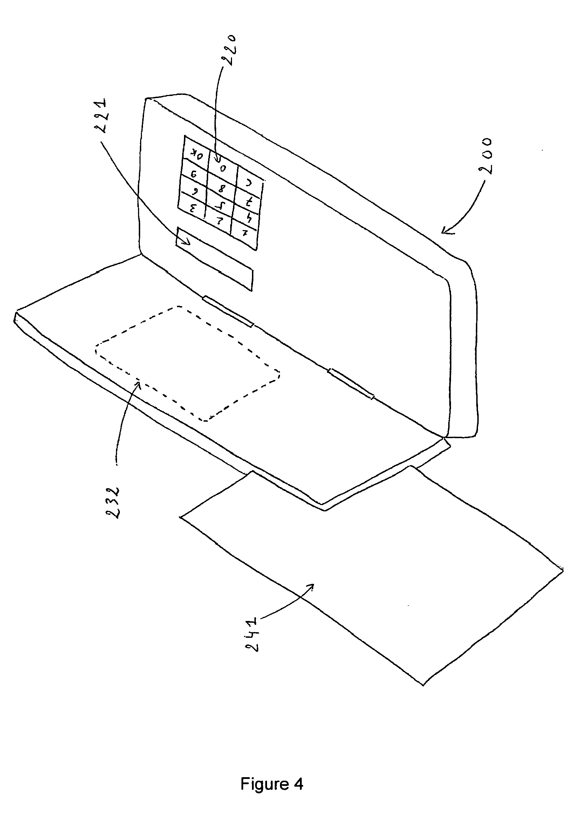

In a variant of the above embodiments shown on Figure 3 and Figure 4, the clamshell mobile phone 200 also comprises a regular user interface. The hardware components of the regular user interface comprise a keypad 210, a microphone 211, a display 212, a speaker 213 and a joystick 214. But the regular user interface hardware components of the clamshell mobile phone 200 are located on the outer part of the clamshell mobile phone 200. The size of the clamshell mobile phone 200 of the invention is similar to the size of regular clamshell mobile phones of state of the art.

The clamshell mobile phone 200 also comprises a secure user interface, the hardware components of the secure user interface comprising a secure keypad 220 and a secure display 221. The secure user interface hardware components of the clamshell mobile phone 200 are located on the inner part of the clamshell mobile phone 200.

The clamshell mobile phone 200 further comprises a reader for communicating with a bankcard. This reader comprises interfaces, namely an ISO 14443 contact-less interface for communicating with a contact-less bankcard, and an ISO 7816 interface 231 for communicating with an contact bankcard 241. The contact-less interface consists primarily of an antenna 232 in the body of the clamshell mobile phone 200.

In this embodiment, the clamshell mobile phone 200 is closed when it has to be used as a mobile phone, and for the initial phase of a payment transaction, and it is open when it comes to the secure part of a payment transaction, which is the final part of the transaction in preferred embodiments. For example, in order to call another person, the user of the clamshell mobile phone 200 types the phone number on the keypad 210 and checks it on the display 212, press the dial button on the keypad 210, and upon connection to the other party, speaks in the microphone 211 and listens to the other party through the speaker 213, in a manner well known in the art. Similarly, the clamshell mobile phone 200 remains in closed position when the user browses the web on the display 212 using a web browser of the clamshell mobile phone and the joystick 214.

The open position is preferably dedicated to the secure part of a payment transaction. For example the merchant may enter the amount on the keypad 210, insert the customer bankcard 241 in the interface 231, open the clamshell mobile phone 200 and pass it to the customer for customer PIN entry, which is the secure phase of the payment transaction of this example.

In preferred embodiments, the secure user interface is located on one of the two elements forming the clamshell mobile phone 200, the other element serving as a cover, hiding what the person types on the secure keypad 220 and sees on the secure display 221. This is particularly advantageous as it helps preserving the secrecy of the PIN code and other secret data.

Different types of payment transaction methods involving the clamshell mobile phone 100 or 200 are disclosed.

It is advantageous to require all sensitive or secret data at one stage of the method, in order to avoid opening and closing the clamshell mobile phone 100 or 200 several times. It is preferred to manage the non-secret and non-sensitive data in a first step and the secret or sensitive data in a second step. Indeed, secret and/or sensitive data are preferably exposed only as little as possible, in particular it is preferable not to expose them if the step involving non-secret and non-sensitive data has failed or is doomed to fail.

This way, each part (inner part and outer part) of the clamshell mobile phone 100 or 200, corresponding to the secure user interface and to the regular user interface or vice versa, is associated with one function (secure management of a payment transaction and mobile communication, or vice versa). This creates a clear boundary between the two parts. In preferred embodiments, third party applications, which may be installed on the clamshell mobile phone 100 or 200, don't have access to the secure user interface, or must be signed by an authority in order to access the secure user interface. Therefore, in the context of a payment transaction, if the user is requested some secret or sensitive information on the regular user interface instead of the secure user interface, he can infer that this is illegitimate and that he should not give such information. Indeed, there must be either a rogue application, or a potentially insecure application, and in both cases the application should not be used.

In a first and second example of payment transaction methods according to the invention, a merchant offering goods and/or services to customers possesses a clamshell mobile phone 100 or 200 according to the invention.

The first example of payment transaction method comprises the following steps:
a. The merchant in possession of the clamshell mobile phone 100 enters payment transaction merchant data on the regular user interface hardware components 110-114
b. The merchant closes the clamshell mobile phone 100 and holds it out to the customer
c. If the payment transaction merchant data comprises sensitive data, the customer checks the sensitive data on the secure display 121
d. The customer enters secret data on the secure keypad 120
e. The customer holds the clamshell mobile phone 100 out to the merchant

The method may comprise additional preliminary, intermediate and/or subsequent steps. For example the customer might enter a bankcard 140, 141 into a reader of the clamshell mobile phone between step c and step d, or the merchant can print a receipt after step e, for example by connecting the clamshell mobile phone 100 to an infra red printer through an infra red LED available on the clamshell mobile phone 100.

The second example of payment transaction method according to the invention comprises the following steps:
a. The merchant in possession of the clamshell mobile phone 200 enters payment transaction merchant data on the regular user interface hardware components 210-214
b. The merchant opens the clamshell mobile phone 200 and holds it out to the customer, or holds out the closed clamshell mobile phone 200 to the customer who opens it
c. If the payment transaction merchant data comprises sensitive data, the customer checks the sensitive data on the secure display 221
d. The customer enters secret data on the secure keypad 220
e. The customer holds the clamshell mobile phone 200 out to the merchant

The method may comprise additional preliminary, intermediate and/or subsequent steps, as is the case with the first example of method described above.

In a third and fourth example of payment transaction methods according to the invention, a customer possesses a clamshell mobile phone 100 or 200.

The third method comprises the following steps:
a. The customer in possession of the clamshell mobile phone 100 or 200 holds it out to the merchant
b. The merchant enters merchant data for the payment transaction on the regular user interface hardware components 110-114 or 210-214
c. The merchants holds out the clamshell mobile phone 100 or 200 to the customer
d. If the payment transaction merchant data comprises sensitive data, the customer checks the sensitive data on the secure display 121 or 221
e. The customer enters secret data on the secure keypad 120 or 220
f. An authority processing the payment transaction sends a notification to the merchant indicating that the payment transaction succeeded
g. The merchant acknowledges receipt of the notification within a predefined delay in order to validate the payment transaction

The method may comprise additional preliminary, intermediate and/or subsequent steps.

In preferred embodiments, the notification sent in step f incorporates the essential elements of the transaction, such as the amount of the transaction and the merchant account to be credited. The authority performing the payment transaction may be a bank. In case the payment transaction is not validated within the predefined delay, the authority preferably cancels it completely. This might be the case when the user has a rogue phone which displays a certain transaction amount but in reality executes a smaller transaction amount, which the merchant realizes in the notification. The predefined delay is preferably short, for example less than 5 minutes, in order to minimize the waiting time for both the customer and the merchant, but long enough for the transaction not to be cancelled if the merchant doesn't have the time to validate it immediately. The notification is preferably done by means of a message, for example SMS or e-mail, to a merchant mobile phone or to a merchant personal computer. Similarly, the notification acknowledgement is preferably done by means of a message, preferably the same type of message as the one used for the notification, and is sent to the aforementioned authority. The authority may immediately and automatically forward the notification acknowledgement message to the customer's clamshell mobile phone 100 or 200. The notification mechanism is advantageous because it gives the merchant the guarantee that the payment transaction is effective and that it has not been simulated on a fake clamshell mobile phone. Consequently the merchant can deliver the goods and/or services in confidence. Forwarding the notification acknowledgement to the customer is advantageous because it tells honest customers that their payment transaction is effective. Consequently, merchants cannot pretend that the transaction has failed and require another payment, for example by cash, which would constitute a double payment.

The fourth example of payment transaction method is a variant of the third method in which the merchant is an online merchant, the clamshell mobile phone 100 or 200 remaining under the customer's custody at all time.

The fourth payment transaction method comprises the following steps:
a. The customer in possession of the clamshell mobile phone 100 or 200 contacts an online merchant. For example the customer contacts a merchant web site from an Internet connection available on a personal computer. Alternatively, the customer contacts the online merchant from the WAP browser of the clamshell mobile phone 100 or 200 or with messaging means available with communication means of the clamshell mobile phone 100 or 200, such as a those commonly available with mobile network (GSM, GPRS UMTS, etc.), a very common one being SMS
b. A communication is established between the merchant and the clamshell mobile phone 100 or 200 through communication means of the clamshell mobile phone 100 or 200. For example, if the customer contacted the online merchant with his clamshell mobile phone 100 or 200, the communication is established at that stage. Alternatively, if the customer contacted the online merchant from an Internet connection available on a personal computer, a server computer of the online merchant may contact him back on his clamshell mobile phone 100 or 200 thereby establishing the communication
c. The merchant sends merchant data for the payment transaction to the clamshell mobile phone 100 or 200 through the communication means of the clamshell mobile phone 100 or 200
d. If the merchant data comprises sensitive data, such as the identification of the product and/or services and the amount of the transaction, the customer checks the sensitive data on the secure display 121 or 221
e. The customer enters secret data on the secure keypad 120 or 220
f. An authority processing the payment transaction sends a notification to the merchant indicating that the payment transaction succeeded

The method may comprise additional preliminary, intermediate and/or subsequent steps.

In general, it is possible but not required to request an acknowledgement of the online merchant within a predefined delay. Indeed, since the customer and the merchant are not usually in the same geographical place, they are not forced to wait together until the payment transaction is confirmed. The service or product delivery can normally be postponed until the merchant accepts the payment transaction, and in case the payment transaction is found to be invalid, the customer or the merchant can cancel it at a later stage with classical methods of state of the art.

## Claims

1. A clamshell mobile phone (100, 200) comprising two parts, said two parts consisting of an inner part and an outer part, wherein the regular user interface of said clamshell mobile phone (100, 200) comprises hardware components (110-114, 210-214), said regular user interface hardware components being located on one part of said clamshell mobile phone (100, 200), said clamshell mobile phone (100, 200) being **characterized in that** it comprises a secure user interface dedicated to payment transactions, the hardware components (120, 121, 220, 221) of said secure user interface being located on the other part of the clamshell mobile phone (100, 200).

2. Clamshell mobile phone (100, 200) according to claim 1, wherein the secure user interface hardware components (120, 121, 220, 221) comprise secure hardware input means (120, 220).

3. The clamshell mobile phone (100, 200) of claim 2, wherein said secure hardware input means (120, 220) comprise a secure keypad (120, 220).

4. Clamshell mobile phone (100, 200) according to any previous claim, wherein the secure user interface hardware components (120, 121, 220, 221) comprise secure hardware output means (121, 221).

5. Clamshell mobile phone (100, 200) according to claim 4, wherein said secure hardware output means (121, 221) comprise a secure display (121,221).

6. Clamshell mobile phone (100, 200) according to any previous claim, the clamshell mobile (100, 200) phone further comprising a reader (130, 131, 231, 232) for communicating with a bankcard (140, 141, 241).

7. Clamshell mobile phone according to claim 6, the reader (130, 131, 231, 232) for communicating with a bankcard (140, 141, 241) comprising at least one of the following interfaces: contact-less interface for communicating with a contact-less bankcard, magnetic stripe interface (130) for communicating with a magnetic stripe bankcard (140), and contact interface (131, 231) for communicating with a contact bankcard (141,241).
